(19) Europäisches Patentamt
European Patent Office
Office européen des brevets

(11) **EP 4 414 427 A1**

(12) **EUROPEAN PATENT APPLICATION**
published in accordance with Art. 153(4) EPC

(43) Date of publication:
**14.08.2024 Bulletin 2024/33**

(21) Application number: **22878441.9**

(22) Date of filing: **30.09.2022**

(51) International Patent Classification (IPC):
*C08L 101/16* (2006.01)          *D01F 6/62* (2006.01)
*D01F 6/84* (2006.01)            *D01F 6/92* (2006.01)
*B33Y 10/00* (2015.01)           *B29C 64/118* (2017.01)
*B29C 64/314* (2017.01)          *C08G 63/06* (2006.01)
*B33Y 70/00* (2020.01)

(52) Cooperative Patent Classification (CPC):
**B29C 64/118; B29C 64/314; B33Y 10/00;
B33Y 70/00; C08G 63/06; C08L 101/16;
D01F 6/62; D01F 6/84; D01F 6/92**

(86) International application number:
**PCT/JP2022/036701**

(87) International publication number:
**WO 2023/058572 (13.04.2023 Gazette 2023/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.10.2021 JP 2021164555**

(71) Applicant: **Toray Industries, Inc.**
**Tokyo 103-8666 (JP)**

(72) Inventors:
• **KOGAWA, Taisuke**
**Otsu-shi, Shiga 520-8558 (JP)**
• **KADOWAKI, Koji**
**Kamakura-shi, Kanagawa 248-8555 (JP)**
• **NAKAMURA, Masataka**
**Otsu-shi, Shiga 520-8558 (JP)**

(74) Representative: **Kador & Partner Part mbB**
**Corneliusstraße 15**
**80469 München (DE)**

(54) **FILAMENT FOR 3D PRINTER AND PRODUCTION METHOD THEREFOR**

(57) [Problem] A flexible and biodegradable filament having excellent printability is provided.

[Solution] A biodegradable filament for 3D printer comprising: an amorphous biodegradable polyester; and a water-soluble polymer different from the biodegradable polyester, wherein the water-soluble polymer has a melting point of 30°C or more and 220°C or less.

EP 4 414 427 A1

**Description**

TECHNICAL FIELD

The present invention relates to a filament for 3D printer containing a polyester and a method for producing the same.

BACKGROUND ART

A fused deposition modeling 3D printer has increasingly become popular, which performs shaping by feeding a filament containing a thermoplastic resin by a feeder, followed by melting and discharging the filament from a nozzle part, and has been widely used not only for personal applications but also for industrial applications, such as manufacturing of parts.

As resins constituting filaments, hard materials, such as polylactic acid and an acrylonitrile-butadiene-styrene copolymer synthetic resin (ABS resin), have been mainly used. However, in recent years, there has been a demand for highly flexible materials, and the development of flexible materials is progressing. As such materials, for example, a filament containing a polyester thermoplastic elastomer (Patent Document 1) and a polymer composition containing a polylactic acid and a dilactide/ε-caprolactone copolymer (Patent Document 2) have been reported.

PRIOR ART DOCUMENTS

Patent Documents

    Patent Document 1: JP 6647749 B
    Patent Document 2: WO 2020/241624

SUMMARY OF THE INVENTION

PROBLEMS TO BE SOLVED BY THE INVENTION

In recent years, 3D printers have been developed also for medical applications, and personalized medicine has drawn attention, in which custom-made medical devices fitted to shapes of bones or organs different in each patient are manufactured using 3D printers, and then implanted into living bodies.

However, since the filament described in Patent Document 1 uses a non-biodegradable elastomer and a molded substance is non-biodegradable, the filament is not suitable for medical appliances required to be decomposed and discharged from the body after finishing its role. The composition described in Patent Document 2 is biodegradable, and therefore suitable for applications as medical appliances. However, filaments manufactured using the composition described in Patent Document 2 are sticky in many cases, and the filaments are bonded to each other or adhere to the inner wall of a guide tube supporting feeding, which has caused a problem of poor printability.

Thus, an object of the present invention is to provide a flexible and biodegradable filament having excellent printability.

MEANS FOR SOLVING THE PROBLEM

The present invention to solve the above-described problems is as follows.

(1) A biodegradable filament for 3D printer including: an amorphous biodegradable polyester; and a water-soluble polymer different from the biodegradable polyester, in which the water-soluble polymer has a melting point of 30°C or more and 220°C or less.

(2) A biodegradable filament for 3D printer including: an amorphous biodegradable polyester; and a biodegradable polymer different from the biodegradable polyester, in which the biodegradable polymer is crystalline.

(3) The filament for 3D printer, according to (1) above, which contains the water-soluble polymer in an amount of 0.1% by mass or more and 50% by mass or less with respect to 100% by mass of the filament.

(4) The filament for 3D printer, according to (2) above, which contains the biodegradable polymer in an amount of 0.1% by mass or more and less than 20% by mass with respect to 100% by mass of the filament.

(5) The filament for 3D printer, according to (1) or (3) above, wherein the water-soluble polymer has a weight average molecular weight of 2,000 or more and 1,500,000 or less.

(6) The filament for 3D printer, according to (2) or (4) above, wherein the biodegradable polymer has a weight average molecular weight of 1,000 or more and 300,000 or less.

(7) The filament for 3D printer, according to (1), (3), or (5) above, wherein the water-soluble polymer is selected from the group consisting of polyethylene glycol, polypropylene glycol, polyacrylic acid, polymethacrylic acid, polyvinyl pyrrolidone, polyvinyl alcohol, polyethyleneimine, and salts, copolymers, and copolymer salts thereof.

(8) The filament for 3D printer, according to (2), (4), or (6) above, wherein the biodegradable polymer is selected from the group consisting of polylactic acid, polyglycolic acid, polycaprolactone, polydioxanone, polyvalerolactone, polyhydroxy hexanoate, polybutylene succinate, and copolymers thereof.

(9) The filament for 3D printer, according to any one of (1) to (8) above, wherein the filament contains polyhydroxycarboxylic acid as the biodegradable polyester, and the polyhydroxycarboxylic acid has two kinds of hydroxycarboxylic acid monomers as a main constituent unit.

(10) The filament according to (9) above, wherein, when the two kinds of hydroxycarboxylic acid monomers are referred to as a "monomer A" and a "monomer B", an R-value represented by Equation (1) below of the polyhydroxycarboxylic acid is 0.45 or more and 0.99 or less (hereinafter, the polyhydroxycarboxylic acid with an R-value of 0.45 or more and 0.99 or less is referred to as a "random polymer").

$$R = [AB]/(2[A][B]) \times 100 \cdots \text{Equation (1)}$$

wherein

[A] represents a mole fraction (%) of a monomer A residue in the polyhydroxycarboxylic acid,

[B] represents a mole fraction (%) of a monomer B residue in the polyhydroxycarboxylic acid, and

[AB] represents a mole fraction (%) of a structure in which the monomer A residue and the monomer B residue are adjacent to each other (A-B and B-A) in the polyhydroxycarboxylic acid.

(11) The filament according to (10) above, wherein the random polymer is contained in an amount of 50% by mass or more and 100% by mass or less based on 100% by mass of the filament.

(12) The filament for 3D printer, according to any one of (1) to (11) above, wherein the filament has an elastic modulus of 2.0 MPa or more and 100.0 MPa or less.

(13) The filament for 3D printer, according to any one of (1) to (12) above, wherein the filament has a recovery rate of 50% or more.

(14) The filament for 3D printer, according to any one of (1) to (13) above, wherein the filament has a diameter of 1.0 mm or more and 5.0 mm or less and a variation coefficient of the diameter of 0% or more and 10% or less.

(15) A method for producing a filament for 3D printer, according to (1), (3), (5), (7), or (9) to (14) above, the method including: charging, into an extruder, a composition obtained by coating an amorphous biodegradable polyester with a powdery or a flake-like water-soluble polymer, raising a temperature to a predetermined temperature, and extruding the composition to obtain the filament.

(16) A method for producing a filament for 3D printer, according to (2), (4), (6), (8), or (9) to (14) above, the method including: charging, into an extruder, a composition obtained by dissolving a biodegradable polymer in a solution of an amorphous biodegradable polyester and removing a solvent, raising the temperature to a predetermined temperature, and extruding the composition to obtain the filament.

(17) A molded body, which is obtained by molding the filament for 3D printer according to any one of (1) to (14) above.

(18) A method for producing a molded body, including steps below:

a step 1 of melting the filament according to any one of (1) to (14) above at a temperature-controllable nozzle part; and

a step 2 of discharging a resin composition constituting the melted filament while the nozzle part is horizontally moved to form a layer, and stacking the resin composition to form a molded body.

EFFECT OF THE INVENTION

The present invention can obtain a flexible and biodegradable filament having excellent printability, and can produce a molded body having biodegradability or bioabsorbability and having flexibility, which is suitable for medical applications.

MODE FOR CARRYING OUT THE INVENTION

The present invention is a biodegradable filament for 3D printer including: an amorphous biodegradable polyester; and a water-soluble polymer different from the biodegradable polyester, in which the water-soluble polymer has a melting point of 30°C or more and 220°C or less.

The filament for 3D printer of the present invention has biodegradability. Herein, the biodegradability refers to a property of being decomposed in living bodies or in the environments. More specifically, the biodegradability refers to the fact that the biodegradation degree determined according to Measurement Example 6 described later is 60% or more. Terms that can be used interchangeably with the biodegradability include bioabsorbability, biocompatibility, and the like, but these terms mainly refer to the property of being decomposed in living bodies in many cases.

The biodegradable polyester contained in the filament for 3D printer of the present invention refers to a polymer in which monomers are connected mainly through ester bonds. In this specification, polymers in which monomers are partially connected through bonds other than the ester bonds, such as a urethane bond or an amide bond, are also referred to as the polyester. To control the biodegradability in a suitable range, the number of bonds other than the ester bonds among the bonds used for connecting the monomers is preferably 30% or less, more preferably 10% or less, still more preferably 5% or less, and most preferably 0%, i.e., a case where the bonds other than the ester bonds are notcontained, when the number of bonds used for connecting the monomers is set to 100%.

The biodegradable polyester contained in the filament for 3D printer of the present invention is amorphous. The crystallinity of the polyester can be measured by differential scanning calorimetry (hereinafter referred to as "DSC"). A case where the crystallization degree of an ester-bonding monomer residue obtained by the method described in Measurement Example 8 described later is 20% or less is considered to be amorphous. When the polyester is composed of a plurality kinds of ester-bonding monomer residues, a case where the crystallization degree of all the monomer residues is 20% or less is considered to be amorphous. From the viewpoint of obtaining a flexible filament, the crystallization degree is preferably lower. The crystallization degree of each ester-bonding monomer residue is preferably 14% or less, more preferably 10% or less, and still more preferably 5% or less. When the polyester is composed of a plurality kinds of ester-bonding monomer residues, it is preferable that all the monomer residues have a low crystallization degree, but it may be also acceptable that only some monomer residues have a low crystallization degree.

The ester-bonding monomer refers to a monomer that can form an ester bond by reacting between monomer-derived functional groups to form a polyester.

The crystallization degree of the monomer residue herein refers to a ratio of the heat of fusion derived from the monomer residue per unit mass of the polyester to the product of the heat of fusion per unit mass of a homopolymer containing only a certain monomer residue and the mass fraction of the monomer residue in the polyester.

The weight average molecular weight of the biodegradable polyester contained in the filament for 3D printer of the present invention is preferably 100,000 or more and 1,000,000 or less, more preferably 150,000 or more and 500,000 or less, and still more preferably 200,000 or more and 400,000 or less from the viewpoint of printability. The weight average molecular weight of the polyester is the weight average molecular weight in terms of polystyrene, which is measured by gel permeation chromatography (hereinafter referred to as "GPC").

The filament for 3D printer of the present invention contains a water-soluble polymer different from the above-described biodegradable polyester, and the water-soluble polymer has a melting point of 30°C or more and 220°C or less.

The filament for 3D printer of the present invention can be produced, for example, by the following method.

A composition obtained by coating a biodegradable polyester with a powdery or flake-like water-soluble polymer is charged into an extruder, the temperature is raised to a predetermined temperature, and the composition is extruded to obtain a filament. In the case of polyester, the temperature when the extrusion is performed is generally 70°C or more and 250°C or less. When the filament is produced by the above-described method, it is necessary to raise the temperature to a temperature higher than the melting point of the water-soluble polymer and the melting point or the glass transition temperature of the polyester. However, when the melting point of the water-soluble polymer is higher than the decomposition temperature of the polyester, the extrusion becomes difficult. When the water-soluble polymer is a liquid, the water-soluble polymer oozes out from the obtained filament, which results in reducing the printability. Thus, the water-soluble polymer is preferably a solid, i.e., has a melting point equal to or higher than room temperature. Therefore, the melting point of the water-soluble polymer is preferably 35°C or more and 200°C or less, more preferably 40°C or more and 150°C or less, still more preferably 45°C or more and 120°C or less, and most preferably 50°C or more and 100°C or less. The melting point of the water-soluble polymer can be measured by the DSC.

Further, there is a method which includes adding a water-soluble polymer to a solution obtained by dissolving the biodegradable polyester in a good solvent, adding a poor solvent, and charging a composition containing the biodegradable polyester and the water-soluble polymer obtained by re-precipitation into an extruder, raising the temperature to a predetermined temperature, and extruding the composition to obtain a filament.

It is considered that mixing the water-soluble polymer with the biodegradable polyester as described above reduces the stickiness of the composition containing the biodegradable polyester and the water-soluble polymer, and stabilizes the extrusion of the filament. This can reduce the variation coefficient of the diameter of the filament described later, and provide a filament having excellent printability.

In particular, the method including charging a composition obtained by coating a biodegradable polyester with a powdery or flake-like water-soluble polymer into an extruder, raising the temperature to a predetermined temperature, and extruding the composition to obtain a filament is preferable because the method does not require an operation of dissolving the water-soluble polymer in a solvent to add the water-soluble polymer and a drying operation, and the water-soluble polymer can be easily added to the biodegradable polyester.

Since the water-soluble polymer needs to be a solid, the weight average molecular weight of the water-soluble polymer is preferably 2,000 or more. On the other hand, when the weight average molecular weight of the water-soluble polymer is too high, the printability decreases, and therefore the weight average molecular weight of the water-soluble polymer is preferably 1,500,000 or less. Further, when medical appliances that are required to be decomposeda and discharged to the outside of the body after finishing its role are produced using the filament of the present invention, the water-soluble polymer is also required to be discharged from the body. Therefore, the weight average molecular weight of the water-soluble polymer is more preferably 170,000 or less, still more preferably 100,000 or less, and most preferably 20,000 or less. By setting the weight average molecular weight of the water-soluble polymer to 170,000 or less, the water-soluble polymer is easily and appropriately discharged from the kidneys. The weight average molecular weight of the water-soluble polymer is the weight average molecular weight in terms of polystyrene measured by the GPC.

As the content of the water-soluble polymer different from the biodegradable polyester, the water-soluble polymer different from the polyester is contained in an amount of preferably 0.1 % by mass or more and 50% by mass or less, more preferably 0.1% by mass or more and 25% by mass or less, still more preferably 0.5% by mass or more and 10% by mass or less, and most preferably 1.0% by mass or more and 5% by mass or less with respect to 100% by mass of the filament.

The water-soluble polymer different from the biodegradable polyester refers to a polymer other than the biodegradable polyester and a polymer that dissolves in water. More specifically, the determination can be performed by evaluating whether the polymer dissolves in water according to Measurement Example 7 described later.

The water-soluble polymer different from the biodegradable polyester contained in the filament for 3D printer of the present invention includes, for example, polyethylene glycol (hereinafter referred to as "PEG"), polypropylene glycol, polyacrylic acid, polymethacrylic acid, polyacrylamide, polyvinylpyrrolidone (hereinafter referred to as "PVP"), polyvinyl acetamide, polymaleic acid, polysulfonic acid, polyvinyl alcohol (hereinafter referred to as "PVA"), polyethyleneimine, carboxymethylcellulose, alginic acid, polyphosphoric acid, starch, agar, gelatin, pullulan, dextrin, xanthan gum, and salts, copolymers, or copolymer salts thereof, and the like. Among them, PEG, polypropylene glycol, polyacrylic acid, polymethacrylic acid, polyacrylamide, PVP, PVA, polyethyleneimine, carboxymethylcellulose, and salts, copolymers, or copolymer salts thereof are preferable from the viewpoint of affinity with the biodegradable polyester. From the viewpoint of the melting point, PEG, polypropylene glycol, polyacrylic acid, polymethacrylic acid, PVP, PVA, polyethyleneimine, and salts, copolymers, or copolymer salts thereof are more preferable; PEG, polypropylene glycol, PVP, PVA, and salts, copolymers, or copolymer salts thereof are still more preferable; and PEG, polypropylene glycol, PVP, and salts, copolymers, or copolymer salts thereof are most preferable.

The present invention is the biodegradable filament for 3D printer containing the amorphous biodegradable polyester and the biodegradable polymer different from the above-described biodegradable polyester, and is the filament for 3D printer in which the above-described biodegradable polymer is crystalline.

The biodegradable polymer different from the above-described biodegradable polyester is crystalline. The crystallinity of the biodegradable polymer can be measured by wide-angle X-ray scattering (hereinafter referred to as "WAXS"). The biodegradable polymer is determined to be crystalline when the crystallization degree obtained by the method described in Measurement Example 9 described later is larger than 20%that. When the biodegradable polymer is a copolymer, the crystallinity may be evaluated by the DSC described in Measurement Example 8. The biodegradable polymer is determined to be crystalline when any of the obtained crystallization degrees derived from the monomers is larger than 20% is determined that.

The biodegradable polymer different from the biodegradable polyester is a polymer having the property of being decomposed in living bodies or in the environments, i.e., a polymer having the biodegradation degree determined by Measurement Example 6 described later of 60% or more.

In the filament for 3D printer of the present invention, the content of the biodegradable polymer different from the biodegradable polyester is preferably 0.1% by mass or more and less than 20% by mass, more preferably 0.5% by mass or more and 15% by mass or less, and still more preferably 1.0% by mass or more and 10% by mass or less with respect to 100% by mass of the filament from the viewpoint of obtaining a flexible filament.

To keep suitable biodegradability of the filament, the weight average molecular weight of the biodegradable polymer different from the amorphous biodegradable polyester is preferably 1,000 or more and 300,000 or less, more preferably 5,000 or more and 250,000 or less, and still more preferably 10,000 or more and 200,000 or less. The weight average molecular weight of the biodegradable polymer is the weight average molecular weight in terms of polystyrene measured by the GPC.

The biodegradable polymer different from the biodegradable polyester contained in the filament for 3D printer of the present invention is preferably a polymer that does not satisfy the requirements of polyhydroxycarboxylic acid with an R-value described later of 0.45 or more and 0.99 or less. In this case, the biodegradable polymer different from the amorphous biodegradable polyester includes polyester, but does not include at least the polyhydroxycarboxylic acid with the R-value of 0.45 or more and 0.99 or less. The biodegradable polymer different from the amorphous biodegradable polyester include, for example, polylactic acid (hereinafter referred to as "PLA), polyglycolic acid, polycaprolactone (hereinafter referred to as "PCL"), polydioxanone, polyvalerolactone, polyhydroxybutyrate, polyhydroxyvalerate, polyhydroxyhexanoate, polybutylene succinate (hereinafter referred to as "PBS"), polybutylene succinate adipate, polybutylene succinate carbonate, polybutylene adipate terephthalate, polytetramethylene adipate terephthalate, polyethylene terephthalate succinate, PVA, pullulan, and copolymers thereof that do not satisfy the requirements of the polyhydroxycarboxylic acid with the R-value of 0.45 or more and 0.99 or less. From the viewpoint of obtaining a flexible filament, PLA, polyglycolic acid, PCL, polydioxanone, polyvalerolactone, polyhydroxybutyrate, polyhydroxyhexanoate, PBS, and copolymers thereof are particularly preferable. As described above, PVA and pullulan are also water-soluble polymers, and therefore are polymers having water-solubility and biodegradability. When the biodegradation degree of the polymer is determined according to Measurement Example 6 described later, the evaluation can be performed, for example, using one obtained by molding the polymer into a film or a pellet.

The filament for 3D printer containing the amorphous biodegradable polyester and the biodegradable polymer different from the biodegradable polyester of the present invention can be produced by the following method.

The biodegradable polymer is dissolved in a solution containing the biodegradable polyester, the composition obtained by removing the solvent from the solution is charged into an extruder, the temperature is raised to a predetermined temperature, and the composition is extruded to obtain a filament.

It is considered that, also by mixing the biodegradable polymer different from the biodegradable polyester with the biodegradable polyester as described above, the stickiness of the composition containing the biodegradable polyester and the biodegradable polymer decreases, and the extrusion of the filament is stabilized. This can reduce the variation coefficient of the diameter of the filament described later, and can provide a filament having excellent printability.

The amorphous biodegradable polyester contained in the filament for 3D printer of the present invention preferably contains polyhydroxycarboxylic acid from the viewpoint of flexibility and biodegradability. The polyhydroxycarboxylic acid refers to a polymer constituted from hydroxy carboxylic acid residues. The hydroxycarboxylic acid refers to a compound having both a hydroxy group and a carboxy group in the same molecule.

The polyhydroxycarboxylic acid can be obtained by polymerization of the hydroxycarboxylic acid, polymerization of lactone, which is a cyclic compound obtained by intramolecular dehydration condensation of the hydroxy group and the carboxyl group of the hydroxycarboxylic acid, polymerization of lactide which is a cyclic compound obtained by dehydration condensation of the hydroxy group and the carboxyl group between two molecules of the hydroxycarboxylic acids, or the like. That is, the hydroxycarboxylic acid, lactone, or lactide is usable as hydroxycarboxylic acid monomers.

The hydroxycarboxylic acid used as the hydroxycarboxylic acid monomer include lactic acid, glycolic acid, hydroxybutyric acid, hydroxyvaleric acid, hydroxycaproic acid, hydroxyheptanoic acid, hydroxyoctanoic acid, hydroxynonanoic acid, hydroxydecanoic acid, hydroxyundecanoic acid, hydroxydodecanoic acid, (2-hydroxyethoxy)acetic acid, and the like. Among these, lactic acid, glycolic acid, hydroxyvaleric acid, and hydroxycaproic acid are preferable, and lactic acid and hydroxycaproic acid are particularly preferable.

As lactone used as the hydroxycarboxylic acid monomer, butyrolactone, valerolactone, caprolactone (hereinafter referred to as "CL"), dioxepanone, ethylene oxalate, p-dioxanone, trimethylene carbonate, β-propiolactone, pivalolactone, and the like are . In particular, butyrolactone, valerolactone, CL, p-dioxanone, and trimethylene carbonate are preferable, and valerolactone and CL are more preferable.

As lactide used as the hydroxycarboxylic acid monomer, dilactide (hereinafter referred to as "LA") obtained by dehydration condensation of two molecules of lactic acids, glycolide obtained by dehydration condensation of two molecules of glycolic acids, and tetramethyl glycolide are usable, and in particular LA and glycolide are preferable.

When the biodegradable polyester contained in the filament for 3D printer of the present invention is the polyhydroxycarboxylic acid, polyhydroxycarboxylic acid containing two kinds of hydroxycarboxylic acid monomers as the main constituent unit is preferable from the viewpoint of obtaining a flexible filament. The phrase that the polyhydroxycarboxylic acid has two kinds of hydroxycarboxylic acid monomers as the main constituent unit means that the sum of the number of the two kinds of monomer residues is 50% by mole or more when the sum of the number of all monomer residues, including the other monomer residues, contained in the whole polyhydroxycarboxylic acid is set to 100% by mole; and each of the residues is 20% by mole or more when the sum of the number of all monomer residues contained in the whole polyhydroxycarboxylic acid is set to 100% by mole. Herein, the "monomer residue" refers to, in principle, a repeating unit of a chemical structure derived from the monomer in the chemical structure of the polyhydroxycarboxylic acid obtained by polymerizing two or more kinds of monomers including the monomer.

For example, the phrase that the monomer A residue and the monomer B residue are contained as the main constituent units means that the sum of the residue numbers of the monomer A residue and the monomer B residue is 50% by mole or more, the monomer A residue is 20% by mole or more, and the monomer B residue is 20% by mole or more, when the sum of the number of all monomer residues contained in the whole polyhydroxycarboxylic acid is set to 100% by mole. Herein, the mole fractions (%) of the monomer A residue, the monomer B residue, and the other residues can be determined from the area value of a signal derived from each of the residues by nuclear magnetic resonance (hereinafter referred to as "NMR") measurement. For example, when the monomer A residue is an LA residue and the monomer B residue is a CL residue, the mole fraction can be determined by Measurement Example 4 described later. When the mole fractions (%) of the monomer A residue, the monomer B residue, and the other residues are calculated, the mole fractions (%) are calculated using the molecular weight of the repeating unit of the chemical structure derived from the monomer. For example, when the monomer A residue is an LA residue and the monomer B residue is a CL residue, the molecular weight of the repeating unit of the monomer A residue is 144, and the molecular weight of the repeating unit of the monomer B residue is 114.

From the definition above, the sum of the monomer A residue and the monomer B residue is 50% by mole or more, preferably 75% by mole or more, and more preferably 90% by mole or more when the sum of all monomer residues, including the other monomer residues, contained in the whole polymer is set to 100% by mole. The monomer A residue and the monomer B residue each are 20% by mole or more, preferably 30% by mole or more, and more preferably 40% by mole or more from the above-described same definition. A particularly preferable aspect is a polymer in which the sum of the monomer A residue and the monomer B residue is 100% by mole of the whole polymer, i.e., a polymer containing only the monomer A and the monomer B.

A more preferable aspect of the present invention is a case where, when the two kinds of hydroxycarboxylic acid monomers are individually referred to as the "monomer A" and the "monomer B", the R-value represented by Equation (1) below is 0.45 or more and 0.99 or less (hereinafter, the polyhydroxycarboxylic acid with the R-value of 0.45 or more and 0.99 or less is referred to as a "random polymer").

$$R = [AB]/(2[A][B]) \times 100 \qquad \cdots \quad \text{Equation (1)}$$

wherein

[A] represents the mole fraction (%) of the monomer A residue in the polyhydroxycarboxylic acid,
[B] represents the mole fraction (%) of the monomer B residue in the polyhydroxycarboxylic acid, and
[AB] represents the mole fraction (%) of the structure (A-B and B-A) in which the monomer A residue and the monomer B residue are adjacent to each other in the polyhydroxycarboxylic acid.

The use of the random polymer as the polyhydroxycarboxylic acid, i.e., setting the R-value of the polyhydroxycarboxylic acid in the range above, is preferable because a flexible filament can be obtained.

Among these, in the present invention, the monomer A and the monomer B are preferably monomers selected from the group consisting of lactic acid, glycolic acid, hydroxybutyric acid, hydroxyvaleric acid, hydroxycaproic acid, hydroxyheptanoic acid, hydroxyoctanoic acid, hydroxynonanoic acid, hydroxydecanoic acid, hydroxyundecanoic acid, hydroxydodecanoic acid, (2-hydroxyethoxy)acetic acid, butyrolactone, valerolactone, CL, dioxepanone, ethylene oxalate, p-dioxanone, trimethylene carbonate, β-propiolactone, pivalolactone, LA, glycolide, or tetramethyl glycolide. The monomer A is particularly preferably a monomer selected from lactic acid, glycolic acid, LA, and glycolide. The monomer B is particularly preferably a monomer selected from hydroxyvaleric acid, hydroxycaproic acid, valerolactone, and CL.

The filament for 3D printer of the present invention preferably contains the above-described random polymer in an amount of 50% by mass or more and 100% by mass or less with respect to 100% by mass of the filament. By setting the amount of the random polymer in the range above, a filament having excellent flexibility and biodegradability can be obtained.

The elastic modulus of the filament for 3D printer of the present invention is preferably 2.0 or more and 100.0 MPa or less. From the viewpoint of setting the flexibility of the filament in a suitable range, the elastic modulus of the filament is more preferably 50.0 MPa or less, still more preferably 35.0 MPa or less, particularly preferably 20.0 MPa or less, and most preferably 10.0 MPa or less. On the other hand, from the viewpoint of the printability of the filament, the elastic modulus of the filament is preferably 3.0 MPa or more, more preferably 3.5 MPa or more, and still more preferably 4.0 MPa or more. The elastic modulus of the filament of the present invention can be determined by Measurement Example 1 described later. The elastic modulus of the filament can be controlled in a suitable range by adjusting the crystallization degree of the monomer, the R-value, or the weight average molecular weight of the biodegradable polyester or the content of the water-soluble polymer or the biodegradable polymer. For example, when the crystallization degree of the monomer of polyester is increased, the elastic modulus increases, and when the R-value is increased, the elastic modulus decreases. When the weight average molecular weight is increased, the elastic modulus increases. When the content of the water-soluble polymer or the biodegradable polymer is increased, the elastic modulus increases. By appropriately selecting the crystallization degree, the R-value, or the weight average molecular weight of the polyester monomer or the content of the water-soluble polymer or the biodegradable polymer as described above, the elastic modulus can be controlled in a suitable range, and a filament having excellent printability can be obtained.

The diameter of the filament for 3D printer of the present invention is preferably 1.0 mm or more and 5.0 mm or less. In 3D printers, filaments having a diameter of 1.0 mm or more and 5.0 mm or less are suitably used. For 3D printer applications, the diameter of the filament is more preferably 1.5 mm or more and 3.5 mm or less, still more preferably 1.6 mm or more and 3.3 mm or less, and most preferably 1.7 mm or more and 3.0 mm or less. The diameter of the filament is the longest distance among the straight-line distances between optional two points on the circumference in the cross section of the filament cut perpendicular to the longitudinal direction. The longest distance among the straight-line distances between optional two points on the circumference in the cross section of the filament cut perpendicular to the longitudinal direction can be determined by measuring the straight-line distances between optional two points on the circumference a plurality of times using a digital caliper while the filament is rotated as appropriate in the circumferential direction without cutting the filament.

When the diameter of the filament is uniform in the longitudinal direction of the filament, the filament can be stably discharged from a nozzle. Thus, the variation coefficient of the diameter, which is an index of the uniformity of the diameter of the filament of the present invention, is preferably 10% or less, more preferably 8% or less, still more preferably 5% or less, and most preferably 3% or less. Since the more uniform diameter of the filament is preferable, the lower limit of the variation coefficient of the diameter of the filament is not particularly determined, and is preferably 0% or more from the viewpoint of practicality. In the present invention, a value obtained by rounding off the first decimal place is used for the variation coefficient. Therefore, for example, a case where the variation coefficient is 0.1% is described as 0%. The variation coefficient of the diameter of the filament can be calculated by the method described in Measurement Example 2 described later.

The recovery rate of the filament for 3D printer of the present invention is preferably 50% or more. To set the flexibility in a suitable range, the recovery rate of the filament is more preferably 60% or more and still more preferably 70% or more. The recovery rate of the filament can be measured according to the method specified in JIS K7161 (2014), and more specifically can be measured according to Measurement Example 3 described later. Since the higher recovery rate of the filament is preferable, the upper limit is 100%. However, from the viewpoint of practical producibility, the recovery rate is preferably 100% or less. The present invention uses a value obtained by rounding off the first decimal place for the recovery rate. Thus, for example, a case where the recovery rate is 99.9% is described as 100%.

The present invention is the filament for 3D printer. The 3D printer is a device that prints a three-dimensional object by stacking resin or metal layer by layer based on three-dimensional data, and includes methods, such as a fused deposition modeling method, a stereolithography method (SLA method or DLP method), an inkjet method, a powder sintering method (SLS method or SLM method), and a powder fixing method. The filament of the present invention can be particularly suitably used for an application as a fused deposition modeling 3D printer.

As described above, the filament of the present invention is suitably used for 3D printer applications. The use of the filament for 3D printer of the present invention can produce molded bodies. More specifically, a molded body can be produced through the following steps using the filament for 3D printer of the present invention. In other words, a method for producing a molded body of the present invention is a method for producing a molded body including the following steps:

Step 1: step of melting the filament for 3D printer of the present invention at a temperature-controllable nozzle part; and
Step 2: step of discharging a resin composition constituting the melted filament while the nozzle part is horizontally moved, to form a layer, and stacking the resin composition to form a molded body.

In step 1, to melt the filament for 3D printer of the present invention, the temperature of the nozzle part is preferably set to 50°C or more and 300°C or less, more preferably set to 75°C or more and 280°C or less, and still more preferably set to 100°C or more and 250°C or less.

In the present invention, the molded body refers to an object molded into any of various shapes according to the purpose by conventional methods. For example, the shapes include film-like bodies (membranes, films, and sheets), plate-like bodies (boards), rod-like bodies (rods), cylindrical bodies (pipes and tubes), thread-like bodies (filaments), net-like bodies (meshes), bag-like bodies, woven fabric or non-woven fabric, and the like; and a complex shape combining the shapes above may also be acceptable. A medical molded body is the above-described molded body used for medical applications. The medical applications include, but are not limited to, sutures, artificial bones, artificial skin, wound dressings, stents, DDS carriers, microneedles, scaffolding materials for regenerating tissues or organs, and the like. The filament of the present invention can be suitably used for producing medical molded bodies.

EXAMPLES

Hereinafter, the present invention is described in detail with reference to Examples and Comparative Examples, but the present invention is not limited thereto.

(Measurement Example 1: Elastic modulus)

The filament was cut into a length of 3 to 4 cm, and a tensile test was performed under the following conditions according to the method specified in JIS K7161 (2014) to measure the elastic modulus. The elastic modulus of the filament was determined by measuring the elastic modulus three times and calculating the number-average value thereof. For the elastic modulus, a value obtained by rounding off the second decimal place was used.
Equipment name: EZ-LX (manufactured by Shimadzu Corporation)
Initial length: 10 mm
Tensile speed: 500 mm/min
Load cell: 1 kN

(Measurement Example 2: Diameter of filament and Variation coefficient of diameter)

The diameters of optional ten locations of the filament were measured using a digital caliper, the average value thereof was determined, and a value obtained by rounding off the second decimal place was used as the diameter of the filament. The variation coefficient of the diameter was determined from Equation (2) below by calculating the standard deviation (sample standard deviation) of the diameters of the ten locations. For the variation coefficient, a value obtained by rounding off the first decimal place was used.

$$\text{Variation coefficient (\%)} = \text{Standard deviation/Average value} \times 100 \cdots \text{Equation (2)}$$

(Measurement Example 3: Recovery rate)

The filament was cut into a length of 3 to 4 cm, and a tensile test was performed under the following conditions according to the method specified in JIS K7161 (2014) to measure the recovery rate. The recovery rate was calculated from the following equation by repeating 90 mm stretching 30 times. The recovery rate of the filament was determined by measuring the recovery rate three times and calculating the average value thereof. For the filament broken during the stretching, "-" is indicated in the table.
When a marked line was attached to test pieces, two marked lines were attached to the test pieces using appropriate markers. When the marked lines were attached, the test piece was not subjected to tension, and then the lines were accurately and clearly attached at right angles to parallel parts of the test piece and equidistant from the center of the test piece.
Equipment name: EZ-LX (manufactured by Shimadzu Corporation)
Distance between marked lines before test: 10 mm
Distance between grippers: 10 mm (the positions of the marked lines were gripped)
Tensile speed: 500 mm/min
Load cell: 1 kN

More specifically, the test piece was stretched by 90 mm at a tensile speed of 500 mm/min to cause a tensile strain (operation 1). Immediately after the operation 1 (i.e., the shape retention time was set to 0 second), the tensile strain was relaxed at a rate of 500 mm/min, and the distance between the grippers was returned to 10 mm (operation 2). Immediately after the operation 2 (i.e., the shape retention time was set to 0 second), the above-described operations 1 and 2 were performed again. The operations 1 and 2 above were repeated to performe 30 times in total. Thereafter, the recovery rate was determined from Equation (3) below using the obtained L1 and L2 values. For the recovery rate, a value obtained by rounding off the first decimal place was used.

$$\text{Recovery rate (\%)} = (L1\text{-}L2)/(L1\text{-}L0) \times 100 \qquad \cdots \text{Equation (3)},$$

wherein

L0: Initial length (distance between marked lines before test),
L1: Filament length when stretched by 90 mm (distance between marked lines when stretched by 90mm),
(L1 means a value obtained by adding 90 mm to the initial length L0)
L2: Filament length after repeating stretching 30 times (distance between marked lines after test)

(Measurement Example 4: Mole fraction and R-value of each residue)

Purified polyhydroxycarboxylic acid was dissolved in heavy chloroform, $^1$H-NMR was measured to calculate the mole fraction (%) of the monomer residue in the polyhydroxycarboxylic acid.

When the polyhydroxycarboxylic acid had two kinds of hydroxycarboxylic acid monomers as the main constituent unit, the two kinds of hydroxycarboxylic acid monomers were individually referred to as the "monomer A" and the "monomer B", and the mole fractions (%) of the monomer A residue and the monomer B residue were individually calculated. As necessary, for the peaks of the monomer A and the monomer B, each peak area was quantified by decoupling by a signal, in which adjacent monomer residues are derived from the monomer A or the monomer B, by $^1$H homo-spin decoupling method. [AB] was calculated from the peak area ratio thereof, and the R-value was calculated from Equation (1) below.

$$R = [AB]/(2[A][B]) \times 100 \qquad \cdots \text{Equation (1)}$$

wherein

[A] represents the mole fraction (%) of the monomer A residue in the polyhydroxycarboxylic acid,
[B] represents the mole fraction (%) of the monomer B residue in the polyhydroxycarboxylic acid, and
[AB] represents the mole fraction (%) of the structure (A-B and B-A) in which the monomer A residue and the monomer B residue are adjacent to each other in the polyhydroxycarboxylic acid.

Herein, [AB] is the mole fraction (%) of the structure (A-B and B-A) in which the monomer A residue and the monomer B residue are adjacent to each other in the polyhydroxycarboxylic acid, and is specifically the ratio of the number of A-B and B-A to the total number of A-A, A-B, B-A, and B-B.

For example, when the monomer A is LA and the monomer B is CL, the peak area was quantified for each of a methine group of LA (around 5.10 ppm), an $\alpha$-methylene group of CL (around 2.35 ppm), and an $\varepsilon$ methylene group (around 4.10 ppm) by decoupling by a signal, in which adjacent monomer residues are derived from LA or CL, by the $^1$H homo-spin decoupling.

Equipment name: JNM-ECZ400R (manufactured by JEOL Ltd.)
$^1$H homo-spin decoupling irradiation position: 1.66 ppm
Solvent: Heavy chloroform
Measurement temperature: room temperature

(Measurement Example 5: Printability evaluation)

The evaluation was performed using a fused deposition modeling 3D printer having a temperature-controllable nozzle part. Specifically, a cube having each side of 1 cm was produced by repeating discharging a resin composition constituting a melted filament while the nozzle part of the 3D printer was horizontally moved, to form a layer, and stacking the resin composition to form a layer.

At that time, the printability of the filament capable of providing a fine cube having a height of 0.8 cm or more was evaluated as "good"; the printability of the filament providing a cube having a height of 0.8 cm or more but having slight defects was evaluated as "somewhat good"; and the printability of the filament which did not fall under either "Good" or "Somewhat good" due to poor stacking or the like of the resin composition due to clogging or the like was evaluated as "Poor".

(Measurement Example 6: Biodegradability evaluation)

The measurement was performed according to the method specified in JIS K6950 (2000). Specifically, an inorganic salt solution (300 mL), activated sludge (9 mg), and the filament (30 mg) were added to a culture bottle, and the mixture was stirred at 25°C for 90 days. At that time, the biodegradation degree was calculated according to Equation (4) below based on the oxygen consumption amount, and those having the biodegradation degree of 60% or more were determined to have biodegradability.

$$\text{Biodegradation degree (\%)} = (\text{BOD-B})/\text{TOD} \times 100 \cdots \text{Equation (4)},$$

BOD: Oxygen consumption amount of filament;
B: Oxygen consumption amount of blank, and
TOD: Theoretical oxygen consumption amount required when filament is completely oxidized.

Herein, the method for evaluating the biodegradability of the filament is described, but a method for evaluating the biodegradability of the polymer was also performed by a similar procedure.

(Measurement Example 7: Water-solubility evaluation)

1 g of the polymer was added into 100 mL of water warmed to 37°C, and the resultant was stirred for 3 hours. When it was visually confirmed that the polymer was dissolved, the polymer was determined to have water-solubility.

(Measurement Example 8: Crystallization degree by DSC measurement)

The polyester or the biodegradable polymer was dissolved in chloroform such that the concentration was 5% by mass, and the solution was transferred onto a polytetrafluoroethylene (PTFE) petri dish and dried at normal pressure and room temperature for twenty-four hours. The resultant was dried under reduced pressure at 50°C for twenty-four hours to obtain a film having a thickness of about 100 $\mu$m.

The obtained film (about 10 mg) was collected in an alumina PAN, and the DSC measurement was performed under the following conditions. Then, the crystallization degree was calculated from the measurement results under the temperature conditions (D) to (E) using Equations (5) and (6) below.

Equipment name: EXSTAR 6000 (manufactured by Seiko Instruments Inc.)
Temperature conditions: (A) 25°C -> (B) 250°C (10°C/min) --> (C) 250°C (5 min) -> (D) -70°C (10°C/min) -> (E) 250°C (10°C/min) -> (F) 250°C (5 min) -> (G) 25°C (100°C/min)
Standard substance: alumina

A residue per unit mass of polyester)/{(Heat of fusion per unit mass of homopolymer Crystallization degree of monomer A = (Heat of fusion derived from monomer A residue per unit mass of polyester)/{(Heat of fusion per unit mass of homopolymer containing only monomer A residue) $\times$ (Mass fraction of monomer A residue in polyester)} $\times$ 100

Crystallization degree of monomer B = (Heat of fusion derived from monomer B residue per unit mass of polyester)/{(Heat of fusion per unit mass of homopolymer containing only monomer B residue) $\times$ (Mass fraction of monomer B residue in polyester)} $\times$ 100

Herein, the heat of fusion per unit mass of the homopolymer was determined as follows. The homopolymer was dissolved in chloroform such that the concentration was 5% by mass, and the solution was transferred onto a PTFE petri dish and dried at normal pressure and room temperature for twenty-four hours. The resultant was dried under reduced pressure to obtain a film. The obtained film was collected in an alumina PAN, and the DSC measurement was performed under the following conditions. Then, the heat of fusion was read from the fusion peak area of a graph obtained from the measurement results under the temperature conditions (D) to (E).

Equipment name: EXSTAR 6000 (manufactured by Seiko Instruments Inc.)

Temperature conditions: (A) 25°C → (B) 250°C (10°C/min) → (C) 250°C (5 min) --> (D) -70°C (10°C/min) -> (E) 250°C (10°C/min) -> (F) 250°C (5 min) --> (G) 25°C (100°C/min)
Standard substance: Alumina

(Measurement Example 9: Crystallization degree by WAXS measurement)

The biodegradable polymer was dissolved in chloroform such that the concentration was 5% by mass, and the solution was transferred onto a PTFE petri dish and dried at normal pressure and room temperature for twenty-four hours. The resultant was dried under reduced pressure at 50°C for twenty-four hours to obtain a film having a thickness of about 100 μm.

The obtained biodegradable polymer film (thickness of about 100 μm) was cut into strips (50 mm × 5 mm), and WAXS measurement was performed under the following conditions. The obtained data were analyzed as follows to determine the crystallization degree of the biodegradable polymer.

A graph, in which 2θ is plotted on the horizontal axis and the scattering intensity is plotted on the vertical axis, was created from the obtained scattering images. For images in which orientation was observed, the graph was created including a part having the highest intensity. The obtained graph was subjected to a fitting analysis, and the peaks were divided into the peak derived from the crystalline structure and the peak derived from the amorphous structure. The total sum of the areas of the peaks derived from the crystal structure to the total sum of the areas of the peaks derived from the crystal structure and the amorphous structure was defined as the crystallization degree.

Measurement device: BL03XU beamline (Spring-8)
X-ray wavelength: 0.1 nm

(Measurement Example 10: Weight average molecular weight)

The biodegradable polyester, the water-soluble polymer, or the biodegradable polymer was dissolved in chloroform, caused to pass through a 0.45 μm syringe filter (DISMIC-13HP; manufactured by ADVANTEC) to remove impurities, and then subjected to GPC measurement under the following conditions, thereby calculating the weight average molecular weight of the biodegradable polyester, the water-soluble polymer, or the biodegradable polymer.

Equipment name: Prominence (registered trademark; manufactured by Shimadzu Corporation)
Mobile phase: Chloroform (for HPLC) (manufactured by Wako Pure Chemical Industries, Ltd.)
Flow rate: 1 mL/min
Column: TSKgel GMH$_{HR}$-M (φ7.8 mm × 300 mm; manufactured by Tosoh Corporation)
Detector: UV (254 nm), RI
Column, Detector temperature: 35°C
Standard substance: polystyrene

(Measurement Example 11: Measurement of melting point by DSC)

The water-soluble polymer was dissolved in chloroform (The solvent may be changed as appropriate when the water-soluble polymer was not dissolved in chloroform.) such that the concentration reached 5% by mass, and the solution was transferred onto a PTFE petri dish and dried at normal pressure and room temperature for twenty-four hours. The resultant was dried for twenty-four hours to obtain a film having a thickness of about 100 μm.

The obtained film (about 10 mg) was collected in an alumina PAN, and the DSC measurement was performed under the following conditions. Then, the temperature at which the fusion peak was observed was defined as the melting point from the measurement results under the temperature conditions (D) to (E).

Equipment name: EXSTAR 6000 (manufactured by Seiko Instruments Inc.)
Temperature conditions: (A) 25°C → (B) 250°C (10°C/min) → (C) 250°C (5 min) → (D) -70°C (10°C/min) → (E) 250°C (10°C/min) → (F) 250°C (5 min) → (G) 25°C (100°C/min)
Standard substance: Alumina

(Example 1)

50.0 g of L,L-dilactide ("PURASORB" (registered trademark) L; manufactured by PURAC) and 39.6 g of ε-caprolactone (manufactured by Fujifilm Wako Pure Chemical Industries Ltd.) as monomers and 0.45 g of hydroxy pivalic acid as an initiator were collected in a separable flask. These substances were placed under an argon atmosphere, 0.27 g of tin (II) octylate (manufactured by Fujifilm Wako Pure Chemical Industries Ltd.) as a catalyst dissolved in 3.0 mL of toluene (super dehydrated) (manufactured by Fujifilm Wako Pure Chemical Industries Ltd.) was added thereto, and the mixture was reacted at 130°C for 9.5 hours to obtain a coarse copolymer. The obtained coarse copolymer was dissolved in 200 mL of chloroform and added dropwise to 3000 mL of hexane in a stirring state to obtain a precipitate. The precipitate was dried under reduced pressure at 50°C to give a macromer.

50 g of the macromer, 2.1 g of p-toluenesulfonic acid 4,4-dimethylaminopyridinium (synthetic product) as a catalyst, and 0.80 g of 4,4-dimethylaminopyridine (manufactured by Fujifilm Wako Pure Chemical Industries Ltd.) were collected. These substances were placed under an argon atmosphere, dissolved in 200 mL of dichloromethane (dehydrated) (manufactured by Fujifilm Wako Pure Chemical Industries Ltd.), and added with 1.7 mL of diisopropylcarbodiimide (manufactured by Fujifilm Wako Pure Chemical Industries Ltd.) as a condensing agent, followed by condensation polymerization at room temperature overnight.

The reaction mixture was diluted with 220 mL of chloroform, 470 mL of 0.5 mol/L hydrochloric acid was added to the resultant mixture, followed by stirring for 30 minutes, and the aqueous layer was removed by decantation. Thereafter, a step of adding 470 mL of ion-exchanged water, stirring the mixture for 10 minutes, and removing the aqueous layer by decantation was repeated until the pH of the removed aqueous layer reached 7. The remaining organic layer was added dropwise to 3000 mL of methanol in a stirring state to obtain a precipitate. This precipitate was dried under reduced pressure at 50°C to obtain polyester 1. Next, the polyester 1 was dissolved in 420 mL of chloroform, 1.9 g of PEG (manufactured by Sigma-Aldrich Production GmbH) was further dissolved therein, and then the resultant solution was added to 3000 mL of hexane in a stirring state to obtain a precipitate. This precipitate was dried under reduced pressure at 50°C to give a composition.

The obtained composition was cut into 5 mm squares, charged into an extruder, and extruded such that the diameter of a filament was 1.8 mm to obtain a filament 1. The obtained filament 1 was subjected to the measurements described in Measurement Examples 1 to 8, 10, and 11. The results are shown in Table 1.

(Example 2)

50.0 g of L,L-dilactide ("PURASORB" (registered trademark) L; manufactured by PURAC) and 39.6 g of ε-caprolactone (manufactured by Fujifilm Wako Pure Chemical Industries Ltd.) as monomers and 0.45 g of hydroxy pivalic acid as an initiator were collected in a separable flask. These substances were placed under an argon atmosphere, 0.27 g of tin (II) octylate (manufactured by Fujifilm Wako Pure Chemical Industries Ltd.) as a catalyst dissolved in 3.0 mL of toluene (super dehydrated) (manufactured by Fujifilm Wako Pure Chemical Industries Ltd.) was added thereto, and the resulting mixture was reacted at 140°C for 9.5 hours to obtain a coarse copolymer. The obtained coarse copolymer was dissolved in 200 mL of chloroform and added dropwise to 3000 mL of hexane in a stirring state to obtain a precipitate. The precipitate was dried under reduced pressure at 50°C to obtain a macromer.

50 g of the macromer, 2.1 g of p-toluenesulfonic acid 4,4-dimethylaminopyridinium (synthetic product) as a catalyst, and 0.80 g of 4,4-dimethylaminopyridine (manufactured by Fujifilm Wako Pure Chemical Industries Ltd.) were collected. These substances were placed under an argon atmosphere, dissolved in 200 mL of dichloromethane (dehydrated) (manufactured by Fujifilm Wako Pure Chemical Industries Ltd.), and added with 1.7 mL of diisopropylcarbodiimide (manufactured by Fujifilm Wako Pure Chemical Industries Ltd.) as a condensing agent, followed by condensation polymerization at room temperature overnight.

The reaction mixture was diluted with 220 mL of chloroform, 470 mL of 0.5 mol/L hydrochloric acid was added to the resultant mixture, followed by stirring for 30 minutes, and the aqueous layer was removed by decantation. Thereafter, a step of adding 470 mL of ion-exchanged water, stirring the mixture for 10 minutes, and removing the aqueous layer by decantation was repeated until the pH of the removed aqueous layer reached 7. The remaining organic layer was added dropwise to 3000 mL of methanol in a stirring state to obtain a precipitate. This precipitate was dried under reduced pressure at 50°C to obtain polyester 2.

The obtained polyester 2 was cut into 5 mm squares, and then coated with PEG (manufactured by Sigma-Aldrich Production GmbH) crushed using a mortar and a pestle to obtain a composition. The composition was charged into an extruder and extruded such that the diameter of the filament was 1.8 mm to obtain a filament 2. The obtained filament 2 was subjected to the measurements described in Measurement Examples 1 to 8, 10, and 11. The results are shown in Table 1.

(Example 3)

Polyester 3 was obtained by performing operations in the same manner as in Example 1, except that the reaction temperature for obtaining a coarse copolymer was changed to 140°C, and then a filament 3 was obtained by performing operations in the same manner as in Example 1, except that the amount of PEG was changed to 2.5 g. The obtained filament 3 was subjected to the measurements described in Measurement Examples 1 to 8, 10, and 11. The results are shown in Table 1.

(Example 4)

Polyester 4 was obtained by performing operations in the same manner as in Example 1, except that the amount of toluene was changed to 4.2 mL, the reaction temperature for obtaining a coarse copolymer was changed to 150°C, the amount of 4,4-dimethylaminopyridinium p-toluenesulfonate was changed to 1.8 g, the amount of 4,4-dimethylaminopyridine was changed to 0.60 g, and the amount of diisopropylcarbodiimide was changed to 1.5 mL, and then a filament 4 was obtained by performing operations in the same manner as in Example 1, except that the amount of PEG was changed to 2.3 g. The obtained filament 4 was subjected to the measurements described in Measurement Examples 1 to 8, 10, and 11. The results are shown in Table 1.

(Example 5)

A filament 5 was obtained by performing operations in the same manner as in Example 1, except that 2.1 g of PLA (manufactured by Nature3D) was dissolved in place of 1.9 g of PEG. The obtained filament 5 was subjected to the measurements described in Measurement Examples 1 to 6 and 8 to 10. The results are shown in Table 1.

(Example 6)

A filament 6 was obtained by performing operations in the same manner as in Example 1, except that 5.6 g of PLA (manufactured by Nature3D) was dissolved in place of 1.9 g of PEG. The obtained filament 6 was subjected to the measurements described in Measurement Examples 1 to 6 and 8 to 10. The results are shown in Table 1.

(Example 7)

A filament 7 was obtained by performing operations in the same manner as in Example 1, except that 12.5 g of PLA (manufactured by Nature3D) was dissolved in place of 1.9 g of PEG. The obtained filament 7 was subjected to the measurements described in Measurement Examples 1 to 6 and 8 to 10. The results are shown in Table 1.

(Example 8)

A filament 8 was obtained by performing operations in the same manner as in Example 1, except that 21.4 g of PLA (manufactured by Nature3D) was dissolved in place of 1.9 g of PEG. The obtained filament 8 was subjected to the measurements described in Measurement Examples 1 to 6 and 8 to 10. The results are shown in Table 1.

(Example 9)

A filament 9 was obtained by performing operations in the same manner as in Example 1, except that 2.1 g of PCL (manufactured by Nature3D) was dissolved in place of 1.9 g of PEG. The obtained filament 9 was subjected to the measurements described in Measurement Examples 1 to 6 and 8 to 10. The results are shown in Table 1.

(Example 10)

A filament 10 was obtained by performing operations in the same manner as in Example 1, except that 1.1 g of PBS (manufactured by Nature3D) was dissolved in place of 1.9 g of PEG. The obtained filament 10 was subjected to the measurements described in Measurement Examples 1 to 6 and 8 to 10. The results are shown in Table 1.

(Example 11)

A filament 11 was obtained by performing operations in the same manner as in Example 1, except that 21.4 g of PLA (manufactured by Nature3D) was dissolved in place of 1.9 g of PEG and the resultant substance was extruded such that the diameter of the filament was 2.9 mm. The obtained filament 11 was subjected to the measurements described in Measurement Examples 1 to 6 and 8 to 10. The results are shown in Table 1.

(Example 12)

Polyester 5 was obtained by performing operations in the same manner as in Example 1, except that the amount of hydroxypivalic acid was changed to 0.34 g and the reaction temperature for obtaining a coarse copolymer was changed to 140°C, and then a filament 12 was obtained by performing operations in the same manner as in Example 1, except that the amount of PEG was changed to 4.5 g. The obtained filament 12 was subjected to the measurements described in Measurement Examples 1 to 8, 10, and 11. The results are shown in Table 1.

(Example 13)

Polyester 6 was obtained by performing operations in the same manner as in Example 1, except that the amount of hydroxypivalic acid was changed to 0.38 g and the reaction temperature for obtaining a coarse copolymer was changed to 150°C, and then a filament 13 was obtained by performing operations in the same manner as in Example 1, except that the amount of PEG was changed to 2.0 g. The obtained filament 13 was subjected to the measurements described in Measurement Examples 1 to 8, 10, and 11. The results are shown in Table 1.

(Example 14)

A filament 14 was obtained by performing operations in the same manner as in Example 1, except that 2.5 g of PVP (manufactured by Tokyo Chemical Industry Co., Ltd.) was dissolved in place of 1.9 g of PEG. The obtained filament 14 was subjected to the measurements described in Measurement Examples 1 to 8, 10, and 11. The results are shown in Table 1.

(Example 15)

A filament 15 was obtained by performing operations in the same manner as in Example 2, except that PVA (manufactured by Sigma-Aldrich Production GmbH) was used in place of PEG (manufactured by Sigma-Aldrich Production GmbH). The obtained filament 15 was subjected to the measurements described in Measurement Examples 1 to 8, 10, and 11. The results are shown in Table 1.

(Example 16)

A filament 16 was obtained by performing operations in the same manner as in Example 1, except that the amount of PEG was changed to 7.5 g. The obtained filament 16 was subjected to the measurements described in Measurement Examples 1 to 8, 10, and 11. The results are shown in Table 1.

(Example 17)

A filament 17 was obtained by performing operations in the same manner as in Example 1, except that the amount of PEG was changed to 16.1 g. The obtained filament 17 was subjected to the measurements described in Measurement Examples 1 to 8, 10, and 11. The results are shown in Table 1.

(Example 18)

A filament 18 was obtained by performing operations in the same manner as in Example 1, except that the polyester 5 was used in place of the polyester 1 and the amount of PEG was changed to 10.0 g. The obtained filament 18 was subjected to the measurements described in Measurement Examples 1 to 8, 10, and 11. The results are shown in Table 1.

(Example 19)

A filament 19 was obtained by performing operations in the same manner as in Example 2, except that the resultant substance was extruded such that the diameter of the filament to be obtained was 2.9 mm. The obtained filament 19 was subjected to the measurements described in Measurement Examples 1 to 8, 10, and 11. The results are shown in Table 1.

(Comparative Example 1)

A filament 20 was obtained by charging PLA pellets (manufactured by Nature3D) into an extruder and extruding the pellets such that the diameter of the filament was 1.8 mm. The obtained filament 20 was subjected to the measurements described in Measurement Examples 1, 2, 5, 6 and 10. The results are shown in Table 1.

(Comparative Example 2)

A filament 21 was obtained by cutting the polyester 1 into 5 mm squares, charging the cut polyester into an extruder, and extruded such that the diameter of the filament was 1.8 mm. The obtained filament 21 was subjected to the measurements described in Measurement Examples 1 to 6, 8, and 10. The results are shown in Table 1.

(Comparative Example 3)

A filament 22 was obtained by performing operations in the same manner as in Example 1, except that 2.5 g of PEG (manufactured by Fujifilm Wako Pure Chemical Industries Ltd.) was used in place of 1.9 g of PEG (manufactured by Sigma-Aldrich Production GmbH). The obtained filament 22 was subjected to the measurements described in Measurement Examples 1 to 8, 10, and 11. The results are shown in Table 1.

[Table 1-1]

| | Elastic modulus (MPa) | Presence or absence of biodegradability | Diameter (mm) | Variation coefficient of diameter (%) | Recovery rate (%) | Polyester | | | | | | | | | |
| | | | | | | Monomer A | Monomer B | [A] (%) | [B] (%) | [AB] (%) | R-value | Weight average molecular weight (×10³) | Rate in filament (% by mass) | Crystallization degree of monomer A (%) | Crystallization degree of monomer B (%) |
|---|---|---|---|---|---|---|---|---|---|---|---|---|---|---|---|
| Example 1 | 6.5 | Presence | 1.8 | 4 | 76 | LA | CL | 49 | 51 | 25 | 0.50 | 184 | 96 | 0 | 0 |
| Example 2 | 4.2 | Presence | 1.8 | 3 | 77 | LA | CL | 49 | 51 | 30 | 0.60 | 198 | 97 | 0 | 0 |
| Example 3 | 4.9 | Presence | 1.8 | 3 | 78 | LA | CL | 49 | 51 | 30 | 0.60 | 309 | 95 | 0 | 0 |
| Example 4 | 6.4 | Presence | 1.8 | 4 | 65 | LA | CL | 50 | 50 | 38 | 0.76 | 163 | 96 | 0 | 0 |
| Example 5 | 100 | Presence | 1.8 | 4 | 72 | LA | CL | 49 | 51 | 25 | 0.50 | 184 | 96 | 0 | 0 |
| Example 6 | 13.4 | Presence | 1.8 | 3 | 70 | LA | CL | 49 | 51 | 25 | 0.50 | 184 | 90 | 0 | 0 |
| Example 7 | 17.1 | Presence | 1.8 | 2 | 53 | LA | CL | 49 | 51 | 25 | 0.50 | 184 | 80 | 0 | 0 |
| Example 8 | 31.6 | Presence | 1.8 | 2 | - | LA | CL | 49 | 51 | 25 | 0.50 | 184 | 70 | 0 | 0 |
| Example 9 | 6.6 | Presence | 1.8 | 4 | 71 | LA | CL | 49 | 51 | 25 | 0.50 | 184 | 98 | 0 | 0 |
| Example 10 | 9.8 | Presence | 1.8 | 5 | 69 | LA | CL | 49 | 51 | 25 | 0.50 | 184 | 96 | 0 | 0 |
| Example 11 | 33.1 | Presence | 2.9 | 2 | - | LA | CL | 49 | 51 | 25 | 0.50 | 184 | 70 | 0 | 0 |
| Example 12 | 2.9 | Presence | 1.8 | 4 | 33 | LA | CL | 45 | 55 | 35 | 0.72 | 134 | 92 | 0 | 0 |
| Example 13 | 2.2 | Presence | 1.8 | 6 | 52 | LA | CL | 51 | 49 | 43 | 0.87 | 166 | 96 | 0 | 0 |
| Example 14 | 6.1 | Presence | 1.8 | 8 | 78 | LA | CL | 49 | 51 | 25 | 0.50 | 184 | 95 | 0 | 0 |
| Example 15 | 8.3 | Presence | 1.8 | 9 | 64 | LA | CL | 49 | 51 | 30 | 0.60 | 198 | 88 | 0 | 0 |
| Example 16 | 18.7 | Presence | 1.8 | 3 | 61 | LA | CL | 49 | 51 | 25 | 0.50 | 184 | 85 | 0 | 0 |
| Example 17 | 72.1 | Presence | 1.8 | 5 | 42 | LA | CL | 49 | 51 | 25 | 0.50 | 184 | 68 | 0 | 0 |
| Example 18 | 12.9 | Presence | 1.8 | 6 | 44 | LA | CL | 49 | 55 | 35 | 0.72 | 134 | 80 | 0 | 0 |
| Example 19 | 5.5 | Presence | 2.9 | 3 | 75 | LA | CL | 49 | 51 | 30 | 0.60 | 198 | 96 | 0 | 0 |
| Comparative Example 1 | 2300 | Presence | 1.8 | 3 | - | - | - | - | - | - | - | 200 | 100 | - | - |

| | Elastic modulus (MPa) | Presence or absence of biodegradability | Diameter (mm) | Variation coefficient ofdiameter (%) | Recovery rate (%) | Polyester | | | | | | | | | | |
|---|---|---|---|---|---|---|---|---|---|---|---|---|---|---|---|---|
| | | | | | | Monomer A | Monomer B | [A] (%) | [B] (%) | [AB] (%) | R-value | Weight average molecular weight ($\times 10^3$) | Rate in filament (% by mass) | Crystallization degree of monomer A (%) | Crystallization degree of monomer B (%) |
| Comparative Example 2 | 5.1 | Presence | 1.7 | 32 | 72 | LA | CL | 49 | 51 | 25 | 0.50 | 184 | 100 | 0 | 0 |
| Comparative Example 3 | 3.8 | Presence | 1.8 | 7 | 71 | LA | CL | 49 | 51 | 25 | 0.50 | 184 | 95 | 0 | 0 |

EP 4 414 427 A1

[Table 1-2]

| | Water-soluble polymer | | | | | Biodegradable polymer | | | | | Printability |
|---|---|---|---|---|---|---|---|---|---|---|---|
| | Polymer | Presence or absence of water-solubility | Melting point (°C) | Weight average molecular weight ($\times 10^3$) | Rate in filament (% by mass) | Polymer | Presence or absence of biodegradability | Crystallization degree (%) | Weight average molecular weight ($\times 10^3$) | Rate in filament (% by mass) | |
| Example 1 | PEG | Presence | 55 | 10 | 4 | - | - | - | | - | Good |
| Example 2 | PEG | Presence | 55 | 10 | 3 | - | - | - | | - | Good |
| Example 3 | PEG | Presence | 55 | 10 | 5 | - | - | - | | - | Good |
| Example 4 | PEG | Presence | 55 | 10 | 4 | - | - | - | | - | Good |
| Example 5 | - | - | - | - | - | PLA | Presence | 23 | 200 | 4 | Good |
| Example 6 | - | - | - | - | - | PLA | Presence | 23 | 200 | 10 | Good |
| Example 7 | - | - | - | - | - | PLA | Presence | 23 | 200 | 20 | Good |
| Example 8 | - | - | - | - | - | PLA | Presence | 23 | 200 | 30 | Good |
| Example 9 | - | - | - | - | - | PCL | Presence | 42 | 200 | 2 | Good |
| Example 10 | - | - | - | - | - | PBS | Presence | 35 | 130 | 4 | Good |
| Example 11 | - | - | - | - | - | PLA | Presence | 23 | 200 | 30 | Good |
| Example 12 | PEG | Presence | 55 | 10 | 8 | - | - | - | - | - | Somewhat good |
| Example 13 | PEG | Presence | 55 | 10 | 4 | - | - | - | - | - | Somewhat good |
| Example 14 | PVP | Presence | 150 | 1.200 | 5 | - | - | - | - | - | Good |
| Example 15 | PVA | Presence | 200 | 10 | 12 | - | - | - | - | - | Good |
| Example 16 | PEG | Presence | 55 | 10 | 15 | - | - | - | - | - | Good |
| Example 17 | PEG | Presence | 55 | 10 | 32 | - | - | - | - | - | Good |
| Example 18 | PEG | Presence | 55 | 10 | 20 | - | - | - | - | - | Good |
| Example 19 | PEG | Presence | 55 | 10 | 4 | - | - | - | - | - | Good |

| | Water-soluble polymer | | | | | Biodegradable polymer | | | | | Printability |
|---|---|---|---|---|---|---|---|---|---|---|---|
| | Polymer | Presence or absence of water-solubility | Melting point (°C) | Weight average molecular weight ($\times 10^3$) | Rate in filament (% by mass) | Polymer | Presence or absence of biodegradability | Crystallization degree (%) | Weight average molecular weight ($\times 10^3$) | Rate in filament (% by mass) | |
| Comparative Example 1 | - | - | - | - | - | - | - | - | - | - | Good |
| Comparative Example 2 | - | - | - | - | - | - | - | - | - | - | Poor |
| Comparative Example 3 | PEG | Presence | 6 | 0.4 | 5 | - | - | - | - | - | Poor |

In the table, the "Presence or absence of biodegradability " means the evaluation result of the presence or absence of biodegradability of each of the filaments.

In the table, "-" in the "Recovery rate" means that the filament was broken in the measurement.

In the table, [A] means the mole fraction (%) of the monomer A residue in the polyhydroxycarboxylic acid, [B] means the mole fraction (%) of the monomer B residue in the polyhydroxycarboxylic acid, and [AB] means the mole fraction (%) of the structure (A-B and B-A) in which the monomer A residue and the monomer B residue are adjacent to each other in the polyhydroxycarboxylic acid.

In the table, the "Polyester" means the polyhydroxycarboxylic acid with the R-value of 0.45 or more and 0.99 or less, i.e., random polymer.

In the table, the "Biodegradable polymer" means the biodegradable polymer, which does not fall under the biodegradable polyester.

INDUSTRIAL APPLICABILITY

As specific applications of the filament of the present invention, the filament is considered to be utilized for forming molded bodies having shapes, such as film-like bodies (membranes, films, and sheets), plate-like bodies (boards), rod-like bodies (rods), cylindrical bodies (pipes and tubes), thread-like bodies (filaments), net-like bodies (meshes), bag-like bodies, woven fabric or non-woven fabric, and the like, and complex shapes combining the shapes above. In particular, medical applications include, but are not limited to, sutures, artificial bones, artificial skin, wound dressings, stents, DDS carriers, microncedles, scaffolding materials for regenerating tissues or organs, and the like.

**Claims**

1.  A biodegradable filament for 3D printer comprising:

    an amorphous biodegradable polyester; and
    a water-soluble polymer different from the biodegradable polyester,
    wherein the water-soluble polymer has a melting point of 30°C or more and 220°C or less.

2.  A biodegradable filament for 3D printer comprising:

    an amorphous biodegradable polyester; and
    a biodegradable polymer different from the biodegradable polyester,
    wherein the biodegradable polymer is crystalline.

3.  The filament for 3D printer, according to claim 1, which contains the water-soluble polymer in an amount of 0.1% by mass or more and 50% by mass or less with respect to 100% by mass of the filament.

4.  The filament for 3D printer, according to claim 2, which contains the biodegradable polymer in an amount of 0.1% by mass or more and less than 20% by mass with respect to 100% by mass of the filament.

5.  The filament for 3D printer, according to claim 1, wherein the water-soluble polymer has a weight average molecular weight of 2,000 or more and 1,500,000 or less.

6.  The filament for 3D printer, according to claim 2, wherein the biodegradable polymer has a weight average molecular weight of 1,000 or more and 300,000 or less.

7.  The filament for 3D printer, according to claim 1, wherein the water-soluble polymer is selected from the group consisting of polyethylene glycol, polypropylene glycol, polyacrylic acid, polymethacrylic acid, polyvinyl pyrrolidone, polyvinyl alcohol, polyethyleneimine; and salts, copolymers, and copolymer salts thereof.

8.  The filament for 3D printer, according to claim 2, wherein the biodegradable polymer is selected from the group consisting of polylactic acid, polyglycolic acid, polycaprolactone, polydioxanone, polyvalerolactone, polyhydroxy hexanoate, polybutylene succinate; and copolymers thereof.

9.  The filament for 3D printer, according to claim 1 or 2, wherein the filament contains a polyhydroxycarboxylic acid as the biodegradable polyester, and the polyhydroxycarboxylic acid has two kinds of hydroxycarboxylic acid monomers as a main constituent unit.

10. The filament according to claim 9, wherein, when the two kinds of hydroxycarboxylic acid monomers are referred to as a "monomer A" and a "monomer B", an R-value represented by Equation (1) below of the polyhydroxycarboxylic acid is 0.45 or more and 0.99 or less (hereinafter, the polyhydroxycarboxylic acid with an R-value of 0.45 or more and 0.99 or less is referred to as a "random polymer"),

$$R = [AB]/(2[A][B]) \times 100 \qquad \cdots \quad \text{Equation (1)},$$

wherein

[A] represents a mole fraction (%) of a monomer A residue in the polyhydroxycarboxylic acid,
[B] represents a mole fraction (%) of a monomer B residue in the polyhydroxycarboxylic acid, and
[AB] represents a mole fraction (%) of a structure (A-B and B-A) in which the monomer A residue and the monomer B residue are adjacent to each other in the polyhydroxycarboxylic acid.

11. The filament according to claim 10, wherein the random polymer is contained in an amount of 50% by mass or more and 100% by mass or less based on 100% by mass of the filament.

12. The filament for 3D printer, according to claim 1 or 2, wherein the filament has an elastic modulus of 2.0 MPa or more and 100.0 MPa or less.

13. The filament for 3D printer, according to claim 1 or 2, wherein the filament has a recovery rate of 50% or more.

14. The filament for 3D printer, according to claim 1 or 2, wherein the filament has a diameter of 1.0 mm or more and 5.0 mm or less and a variation coefficient of the diameter of 0% or more and 10% or less.

15. A method for producing a filament for 3D printer, according to claim 1, the method comprising: charging, into an extruder, a composition obtained by coating an amorphous biodegradable polyester with a powdery or flake-like water-soluble polymer, raising a temperature to a predetermined temperature, and extruding the composition to obtain the filament.

16. A method for producing a filament for 3D printer, according to claim 2, the method comprising: charging, into an extruder, a composition obtained by dissolving a biodegradable polymer in a solution of an amorphous biodegradable polyester and removing a solvent, raising a temperature to a predetermined temperature, and extruding the composition to obtain the filament.

17. A molded body, which is obtained by molding the filament for 3D printer, according to claim 1 or 2.

18. A method for producing a molded body, comprising steps below:

a step 1 of melting the filament according to claim 1 or 2 at a temperature-controllable nozzle part; and
a step 2 of discharging a resin composition constituting the melted filament while the nozzle part is horizontally moved, to form a layer, and stacking the resin composition to form a molded body.

<div style="text-align:center">**INTERNATIONAL SEARCH REPORT**</div>

| International application No. |
|---|
| **PCT/JP2022/036701** |

**A.    CLASSIFICATION OF SUBJECT MATTER**

*C08L 101/16*(2006.01)i; *D01F 6/62*(2006.01)i; *D01F 6/84*(2006.01)i; *D01F 6/92*(2006.01)i; *B33Y 10/00*(2015.01)i;
*B29C 64/118*(2017.01)i; *B29C 64/314*(2017.01)i; *C08G 63/06*(2006.01)i; *B33Y 70/00*(2020.01)i
FI:    B29C64/118; D01F6/62 302E; D01F6/92 307A; C08G63/06; D01F6/84 303Z; C08L101/16 ZBP; D01F6/62 305A;
B29C64/314; B33Y10/00; B33Y70/00

According to International Patent Classification (IPC) or to both national classification and IPC

**B.    FIELDS SEARCHED**

Minimum documentation searched (classification system followed by classification symbols)

C08L101/16; D01F6/62; D01F6/84; D01F6/92; B29C64/00-64/40; C08G63/06; B33Y10/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2020/193781 A1 (CARBIOS) 01 October 2020 (2020-10-01) claims, p. 3, line 26 to p. 38, line 22 | 1-8, 12-14, 17-18 |
| A | | 9-11, 15-16 |
| X | JP 2022-126589 A (TORAY INDUSTRIES) 30 August 2022 (2022-08-30) claims, paragraphs [0014]-[0112] | 1-14, 17-18 |
| A | | 15-16 |
| E, X | JP 7162941 B1 (J SCIENTECH CO LTD) 31 October 2022 (2022-10-31) claims, paragraphs [0036]-[0062] | 2, 4, 8, 14, 17-18 |

☐ Further documents are listed in the continuation of Box C.        ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 November 2022** | **29 November 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

International application No.

**PCT/JP2022/036701**

| Patent document cited in search report | | | Publication date (day/month/year) | Patent family member(s) | | | Publication date (day/month/year) |
|---|---|---|---|---|---|---|---|
| WO | 2020/193781 | A1 | 01 October 2020 | JP<br>claims, paragraphs [0017]-[0175] | 2022-526344 | A | |
| JP | 2022-126589 | A | 30 August 2022 | (Family: none) | | | |
| JP | 7162941 | B1 | 31 October 2022 | (Family: none) | | | |

Form PCT/ISA/210 (patent family annex) (January 2015)

**EP 4 414 427 A1**

**REFERENCES CITED IN THE DESCRIPTION**

**Patent documents cited in the description**

- JP 6647749 B

- WO 2020241624 A